(19) Europäisches Patentamt / European Patent Office / Office européen des brevets

(11) **EP 3 923 029 A1**

(12) **EUROPEAN PATENT APPLICATION**
published in accordance with Art. 153(4) EPC

(43) Date of publication:
**15.12.2021 Bulletin 2021/50**

(51) Int Cl.:
***G01S 19/07*** (2010.01)

(21) Application number: **19917655.3**

(22) Date of filing: **05.03.2019**

(86) International application number:
**PCT/JP2019/008652**

(87) International publication number:
**WO 2020/178982 (10.09.2020 Gazette 2020/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **MITSUBISHI ELECTRIC CORPORATION**
**Chiyoda-ku**
**Tokyo 100-8310 (JP)**

(72) Inventors:
• **AMISHIMA, Takeshi**
**Tokyo 1008310 (JP)**
• **SUZUKI, Nobuhiro**
**Tokyo 1008310 (JP)**

(74) Representative: **Pfenning, Meinig & Partner mbB**
**Patent- und Rechtsanwälte**
**Theresienhöhe 11a**
**80339 München (DE)**

(54) **INFORMATION PROCESSING DEVICE AND POSITIONING AUGMENTATION INFORMATION TRANSMISSION METHOD**

(57)    A grid interval ($D_h$) to be used in transmitting positioning augmentation information (a) from a quasi-zenith satellite (1) is set on the basis of statistical information of index values of occurrence degree of ionospheric disturbance for each area of the ground divided into a plurality of areas.

# FIG. 2

**Description**

TECHNICAL FIELD

The present invention relates to an information processing device for generating positioning augmentation information to be used for correcting a positioning error of a ground station terminal and a positioning augmentation information transmission method.

BACKGROUND ART

There is a system in which a ground station terminal corrects positioning errors caused by a global navigation satellite system (GNSS) using positioning augmentation information delivered from a quasi-zenith satellite. This system can achieve centimeter-order positioning accuracy and is called CLAS. In CLAS, many electronic reference points are installed on the ground. Furthermore, the ground is divided into a plurality of areas in which virtual grids are set by arranging grid points at an equal interval.

One of the causes of the positioning errors is a delay of a positioning signal in an ionospheric layer. When the propagation of the positioning signal is delayed in the ionospheric layer, a measurement error of a pseudo distance from the GNSS satellite to the ground station terminal occurs to deteriorate positioning accuracy. The positioning augmentation information includes a correction value for delay of the positioning signal in the ionospheric layer. Hereinafter, this correction value will be referred to as an ionospheric correction value. The ionospheric correction value is calculated for each grid point using a measurement result of the pseudo distance obtained from each of the plurality of electronic reference points.

The quasi-zenith satellite sequentially delivers, for each area set on the ground, a positioning augmentation signal including an ionospheric correction value for each of the plurality of grid points set in the area. In CLAS, there is a limit to the transmission capacity of positioning augmentation signals, which is about 2 kbps (bits per second). As a result, it is necessary to reduce (for example, compress) the amount of positioning augmentation information in order to thoroughly deliver the positioning augmentation signal to the entire range of the service target.

For example, Patent Literature 1 describes a positioning system for delivering the positioning augmentation information to a ground station terminal after reducing the amount of the information. This system reduces the amount of positioning augmentation information using methods (1) and (2). The method (1) reduces the number of positioning augmentation signals to be delivered by widening grid intervals within the service target range. The method (2) reduces the amount of information by approximating the ionospheric correction value with a function and delivering only coefficients of the approximated function as positioning augmentation signal.

CITATION LIST

PATENT LITERATURE

Patent Literature 1: International Publication No. 2016/088654

SUMMARY OF INVENTION

TECHNICAL PROBLEM

However, in the case in which grid intervals are widened, although the amount of information to be delivered is reduced, the positioning accuracy deteriorates accordingly. Furthermore, even in the case in which the ionospheric correction value is approximated with the function, the positioning accuracy is deteriorated due to an approximation error. As described above, in the positioning system described in Patent Literature 1, there is a problem that the positioning accuracy deteriorates when the amount of positioning augmentation information is reduced.

Furthermore, the positioning system described in Patent Literature 1 does not consider a deterioration of positioning accuracy due to an ionospheric disturbance. Therefore, there is a problem that the positioning accuracy deteriorates when an ionospheric disturbance occurs and the delay amount of the positioning signal changes.

The present invention solves the above problems and has an object to obtain an information processing device and a positioning augmentation information transmission method capable of reducing the amount of positioning augmentation information while maintaining positioning accuracy even when an ionospheric disturbance occurs.

SOLUTION TO PROBLEM

An information processing device according to the present invention is used in a positioning system that includes a first satellite for transmitting positioning augmentation information, a second satellite for transmitting positioning information, and a terminal that performs positioning using the positioning information, the first satellite transmitting the positioning augmentation information for a grid point set on the ground, and the terminal correcting the positioning information using the positioning augmentation information to perform positioning. The information processing device includes a setting unit for setting an interval between grid points to which the positioning augmentation information from the first satellite is transmitted, on a basis of statistical information on index values of occurrence degree of ionospheric disturbance for each area of the ground divided into a plurality of areas, a calculation unit for calculating positioning correction information for each grid point with the interval set by the setting unit, and a transmission unit for performing a process of transmitting the positioning augmentation information including the positioning correction information calculated by the calculation unit to the first satellite.

ADVANTAGEOUS EFFECTS OF INVENTION

According to the present invention, an interval between grid points to which positioning augmentation information is transmitted from the first satellite is set on the basis of statistical information of index values of occurrence degree of ionospheric disturbance for each area of the ground divided into a plurality of areas. As a result, even when an ionospheric disturbance occurs, it is possible to reduce the amount of positioning augmentation information while maintaining positioning accuracy.

BRIEF DESCRIPTION OF DRAWINGS

FIG. 1 is a diagram showing an outline of a positioning system according to a first embodiment.
FIG. 2 is a block diagram showing a configuration of an information processing device according to the first embodiment.
FIG. 3 is a diagram showing grids for each area set on the ground.
FIG. 4 is a flowchart showing a positioning augmentation information transmission method according to the first embodiment.
FIG. 5A is a block diagram showing a hardware configuration for implementing functions of the information processing device according to the first embodiment. FIG. 5B is a block diagram showing a hardware configuration for executing software that implements functions of the information processing device according to the first embodiment.
FIG. 6 is a block diagram showing a configuration of an information processing device according to a second embodiment.
FIG. 7 is a block diagram showing a configuration of an information processing device according to a third embodiment.
FIG. 8 is a block diagram showing a configuration of an information processing device according to a fourth embodiment.
FIG. 9 is a diagram in which areas susceptible to ionospheric disturbances are divided for each latitude.

DESCRIPTION OF EMBODIMENTS

First Embodiment.

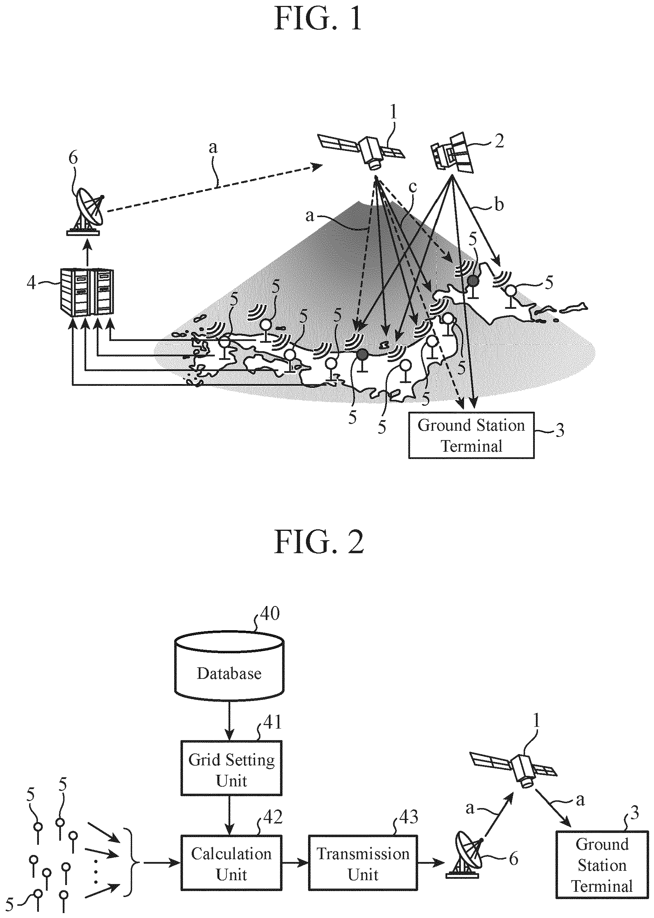

FIG. 1 is a diagram showing an outline of a positioning system according to a first embodiment, and shows CLAS using a quasi-zenith satellite 1. The positioning system shown in FIG. 1 includes, for example, a quasi-zenith satellite 1, a GNSS satellite 2, a ground station terminal 3, a main control station 4, electronic reference points 5, and an uplink station 6.
The quasi-zenith satellite 1 is a first satellite for transmitting positioning augmentation information a to the ground station terminal 3. The positioning augmentation information a is information to be used for correcting positioning information b, and includes correction values for various errors. For example, the correction values included in the positioning augmentation information a include a correction value for the propagation delay of the positioning information in the ionospheric layer, a correction value for the propagation delay of the positioning information in the troposphere, and errors (integrity information) of these correction values.
The GNSS satellite 2 is a second satellite for transmitting positioning information b to the ground station terminal 3. For example, the GNSS satellite 2 is a global positioning system (GPS) satellite. The positioning information b is information used for positioning of the ground station terminal 3.

The ground station terminal 3 is a terminal that performs positioning using the positioning information b. The ground station terminal 3 corrects the positioning information b by using the positioning augmentation information a to perform positioning. The quasi-zenith satellite 1 transmits positioning complementary information c to the ground station terminal 3 in addition to the positioning augmentation information a. The positioning complementary information c is information that complements the positioning using the positioning information b by the ground station terminal 3.

The main control station 4 is an information processing device according to the first embodiment, and generates positioning augmentation information a. The positioning augmentation information a generated by the main control station 4 is output to the uplink station 6. The uplink station 6 transmits the positioning augmentation information a to the quasi-zenith satellite 1. The quasi-zenith satellite 1 delivers the positioning augmentation information a received from the main control station 4 via the uplink station 6 to the ground station terminal 3 as an L6 signal.

The electronic reference points 5 are installed at a plurality of locations on the ground. Each of the electronic reference points 5 receives positioning information b (GNSS signal) from the GNSS satellite 2, estimates an amount of error contained in the positioning information b using known position information of the electronic reference point 5 and the received positioning information b, and transmits the correction information for correcting the estimated amount of error to the main control station 4. For example, in Japan, electronic reference points 5 are installed at about 1,300 locations at intervals of about 20 km.

In CLAS, virtual grids are set at equal intervals on the ground. The grid points are virtual electronic reference points arranged at equal intervals, and the correction value for the transmission delay of the positioning information b in the ionospheric layer is calculated for each grid point. Hereinafter, this correction value will be referred to as an ionospheric correction value. For example, in Japan, grid points are set at about 350 locations at intervals of about 60 km. The quasi-zenith satellite 1 delivers positioning augmentation information a including the ionospheric correction value every 30 seconds.

The ionospheric correction value is the amount of delay of positioning information that has occurred in the ionospheric layer over the distance from the GNSS satellite 2 to each grid point. The ground station terminal 3 measures a pseudo distance between the GNSS satellite and the ground station terminal 3 using the positioning information b, corrects the measured pseudo distance using the ionospheric correction value included in the positioning augmentation information a, and thereby can obtain a highly accurate pseudo distance.

By calculating an ionospheric correction value for each grid point, that is, by allocating an ionospheric correction value for each grid point, the positioning augmentation information a including the ionospheric correction value is spatially compressed. Note that, the transmission capacity of the positioning augmentation information a including the ionospheric correction value is specified to be about 2 kbps.

As described above, because an ionospheric correction value is calculated for each grid point, the ground station terminal 3 can accurately correct the positioning information b by using a piece of positioning augmentation information a, which includes an ionospheric correction value for the grid point set to the location closest to the ground station terminal 3, among pieces of positioning augmentation information a delivered from the quasi-zenith satellite 1. That is, the ground station terminal 3 can receive an ionospheric correction value for a grid point set closer to it as the grid interval becomes narrower, so that the positioning accuracy is improved.

However, the transmission capacity of the positioning augmentation information a is limited (about 2 kbps) and therefore the grid interval cannot be narrowed. On the other hand, when the grid interval is increased from the initial 60 km interval to an interval that is an integral multiple of two or more of the interval (for example, 120 km interval) in order to reduce the amount of information to be transmitted of the positioning augmentation information a, the positioning accuracy deteriorates from centimeter order to decimeter order. In addition, the amount of information to be transmitted is reduced by including only the coefficient when the ionospheric correction value is approximated with the function in the positioning augmentation information a and transmitting it, but the positioning accuracy deteriorates from centimeter order to decimeter order due to the approximation error.

Moreover, because the ionospheric disturbance produces a non-uniform ionospheric layer, the delay of the positioning information b in the ionospheric layer strongly affected by the ionospheric disturbance is different from the delay of the positioning information b in the ionospheric layer weakly affected by the ionospheric disturbance. This difference in delay greatly deteriorates the accuracy of the ionospheric correction value, which is the correction value for the pseudo distance.

Accordingly, in the positioning system according to the first embodiment, the information processing device presets intervals between grid points to which the positioning augmentation information a is transmitted from the quasi-zenith satellite 1, on the basis of the statistical information of index values of the occurrence degree of ionospheric disturbance for each area. As a result, the grid intervals are set according to the degree of influence of the ionospheric disturbance in the past, so that the ground station terminal 3 can maintain the positioning accuracy even if the ionospheric disturbance occurs. Furthermore, because grid intervals are not fixed to a predetermined value (for example, 60 km) and a grid interval can be widened in an area where the degree of influence of ionospheric disturbance is low, the amount of positioning augmentation information a can be reduced.

FIG. 2 is a block diagram showing the configuration of the information processing device according to the first embodiment, the device is a device corresponding to the main control station 4 shown in FIG. 1. The information processing device shown in FIG. 2 includes a database 40, a grid setting unit 41, a calculation unit 42, and a transmission unit 43, and generates positioning augmentation information a for each of a plurality of grid points on the basis of correction information of positioning measured by each of a plurality of electronic reference points 5.

The database 40 is a database that stores index values of occurrence degree of ionospheric disturbance for each area, and stores, for example, past historical data of ionospheric correction values for each grid point in each area. Note that, the ionospheric correction value is monitored for each area for a long period of time and stored in the database 40 until the occurrence degree of ionospheric disturbance for each area can be specified.

In the area strongly affected by the ionospheric disturbance, the spatial variation of the ionospheric correction value for each grid point is large, and in the area not so affected by the ionospheric disturbance, the spatial variation of the ionospheric correction value for each grid point is small. That is, the ionospheric correction value can be an index value of the occurrence degree of ionospheric disturbance.

Note that, the database 40 may be included in a device provided separately from the information processing device according to the first embodiment. In this case, the information processing device according to the first embodiment wirelessly or wiredly connects to the device and reads out the data stored in the database 40. As described above, the information processing device according to the first embodiment does not have to include the database 40.

The grid setting unit 41 is a setting unit that sets the interval between grid points to which positioning augmentation information a is transmitted from the quasi-zenith satellite 1 on the basis of statistical information of the index values of occurrence degree of ionospheric disturbance for each area. For example, the grid setting unit 41 sets the interval between the grid points to which the positioning augmentation information a is transmitted on the basis of statistical information of the past historical data of the ionospheric correction value for each area read from the database 40.

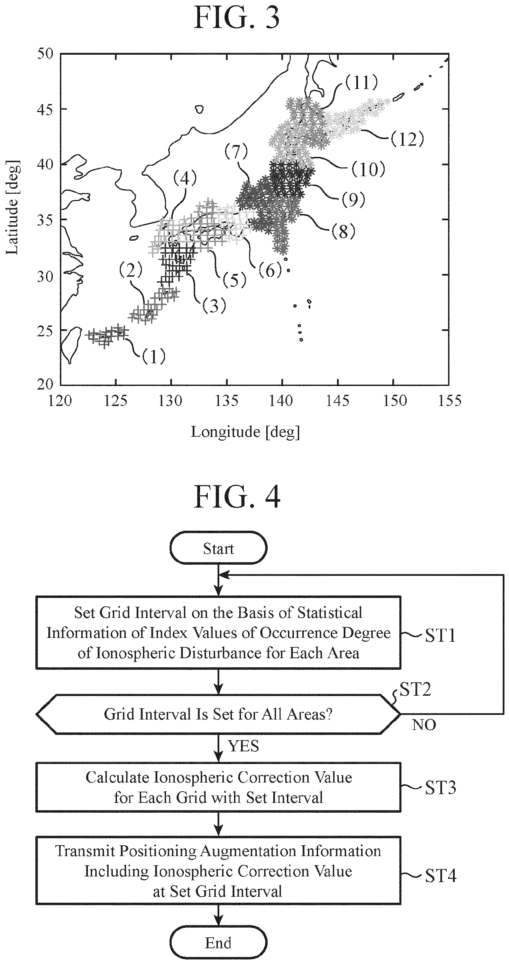

FIG. 3 is a diagram showing grids for each area set on the ground. For example, Japan is divided into areas (1) to (12), and grids are set for each area. Intervals between grid points are statically set by the grid setting unit 41. "Statically" means that intervals between grid points are set in advance on the basis of statistical information of the index values of the occurrence degree of ionospheric disturbance for each area.

The grid setting unit 41 sets a grid interval so that the total number of grid points related with each piece of the positioning augmentation information a delivered from the quasi-zenith satellite 1 is equal to or less than a specified value. The specified value is the total number of grid points that satisfy the limit of the transmission capacity of the positioning augmentation information a.

The calculation unit 42 calculates positioning correction information for respective grid points with the respective intervals set by the grid setting unit 41, on the basis of positioning correction information measured by each of the plurality of electronic reference points 5. The calculation unit 42 in the first embodiment calculates the ionospheric correction value which is the positioning correction information. The transmission unit 43 performs a process of transmitting the positioning augmentation information a including the ionospheric correction value calculated by the calculation unit 42 to the quasi-zenith satellite 1. For example, the transmission unit 43 transmits the positioning augmentation information a to the quasi-zenith satellite 1 via the uplink station 6. The quasi-zenith satellite 1 delivers the positioning augmentation information a received from the main control station 4 to the ground station terminal 3.

Next, the operation of the information processing device according to the first embodiment will be described.

FIG. 4 is a flowchart showing a positioning augmentation information transmission method according to the first embodiment, and shows the operation of the information processing device which is the main control station 4.

The grid setting unit 41 sets the interval between the grid points on the basis of statistical information of the index values of occurrence degree for each area read from the database 40 (step ST1).

For example, the grid setting unit 41 reads an ionospheric correction value $I_{Gi}$ for each grid point expressed by the following equation (1) from the database 40 for each area. In the following equation (1), $x_{Gi}$ and $y_{Gi}$ are the latitude and longitude of the i-th grid point, and $I_{Gi}$ is the ionospheric correction value corresponding to the i-th grid point. N is a natural number greater than or equal to 1.

$$I_{Gi} = ISSR(x_{Gi}, y_{Gi}), i = 1, ..., N \qquad \cdot\cdot\cdot \ ( 1 )$$

Next, the grid setting unit 41 calculates a spatial variation of the ionospheric correction value $I_{Gi}$ for each area on the basis of the following equation (2). In the following equation (2), $i \in h$ means a set of indexes i of the electronic reference point 5 included in the h-th area, and var means to calculate a variance. The grid setting unit 41 reads the ionospheric correction value IGi measured for a long period of time from the database 40, calculates the spatial variation of the ionospheric correction value $I_{Gi}$ using the following equation (2), and calculates the mean value $\bar{\Omega}_h$ bar of the

spatial variation of the ionospheric correction value IGi using the following equation (3). The mean value $\overline{\Omega}_h$ bar can be a measure of the stability of the ionospheric layer.

$$\Omega_h = \mathrm{var}(I_{Gi}), i \in h \qquad \cdots \quad (2)$$

$$\overline{\Omega}_h = mean(\Omega_h) \qquad \cdots \quad (3)$$

The specified value TH of the total number of grid points to which the positioning augmentation information a is transmitted can be expressed by the following inequality (4), where $M_h$ is the number of grid points in each area. In the following inequality (4), H is the total number of areas set on the ground. Further, the number of grid points $M_h$ can be expressed by the following equation (5), where $A_h$ is the area of the area and $D_h$ is the grid interval.

$$\sum_{h=1}^{H} M_h < TH \qquad \cdots \quad (4)$$

$$M_h = \frac{A_h}{D_h} \qquad \cdots \quad (5)$$

The grid setting unit 41 sets the number of grid points $M_h$ according to the following equation (6). That is, the larger the mean value $\overline{\Omega}_h$ bar of the spatial variation of the ionospheric correction value $I_{Gi}$ is, the larger the number is, and the smaller the bar is, the smaller the number is. The grid setting unit 41 sets the grid interval $D_h$ for each area according to the following equation (7). The $\overline{\Omega}_j$ bar is the mean value of the spatial variation of the ionospheric correction value $I_{Gi}$ in the j-th area.

$$M_h = TH \frac{\overline{\Omega}_h}{\sum_{j=1}^{H} \overline{\Omega}_j} \qquad \cdots \quad (6)$$

$$D_h = \frac{A_h}{M_h} = \frac{A_h}{TH\left(\dfrac{\overline{\Omega}_h}{\sum_{j=1}^{H}\overline{\Omega}_j}\right)} = \frac{A_h\left(\sum_{j=1}^{H}\overline{\Omega}_j\right)}{TH\overline{\Omega}_h} \qquad \cdots \quad (7)$$

When the grid interval $D_h$ is set, the grid setting unit 41 confirms whether or not the grid interval $D_h$ is set for all areas (step ST2). Here, if there is an area for which the grid interval $D_h$ has not been set (step ST2; NO), then the grid setting unit 41 returns to the process of step ST1 and sets the grid interval $D_h$ for the next area.
If the grid interval $D_h$ of all areas is set by the grid setting unit 41 (step ST2; YES), then the calculation unit 42 calculates an ionospheric correction value for each grid point with the interval set by the grid setting unit 41 on the basis of the correction information of positioning measured by each of the plurality of electronic reference points 5 (step ST3).
Next, the transmission unit 43 performs a process of transmitting the positioning augmentation information a of the grid interval set by the grid setting unit 41 to the quasi-zenith satellite 1 (step ST4). For example, the transmission unit 43 transmits the positioning augmentation information a including the ionospheric correction value calculated by the calculation unit 42 to the quasi-zenith satellite 1 via the uplink station 6. The quasi-zenith satellite 1 delivers the positioning augmentation information a received from the main control station 4 to the ground station terminal 3. The ground station terminal 3 receives a piece of positioning augmentation information a, which includes the ionospheric correction value for the grid point closest to the ground station terminal 3, among pieces of positioning augmentation information a delivered from the quasi-zenith satellite 1, and corrects the positioning information b by using the ionospheric correction value included in the received positioning augmentation information a. As a result, in the ground station terminal 3, centimeter-class positioning accuracy is achieved.

Subsequently, a hardware configuration for implementing the functions of the information processing device according to the first embodiment will be described. The functions of the grid setting unit 41, the calculation unit 42, and the transmission unit 43 in the information processing device according to the first embodiment are implemented by a processing circuit. That is, the information processing device according to the first embodiment includes a processing circuit for executing the processing from step ST1 to step ST4 in FIG. 4. The processing circuit may be dedicated hardware or a central processing unit (CPU) that executes a program stored in a memory.

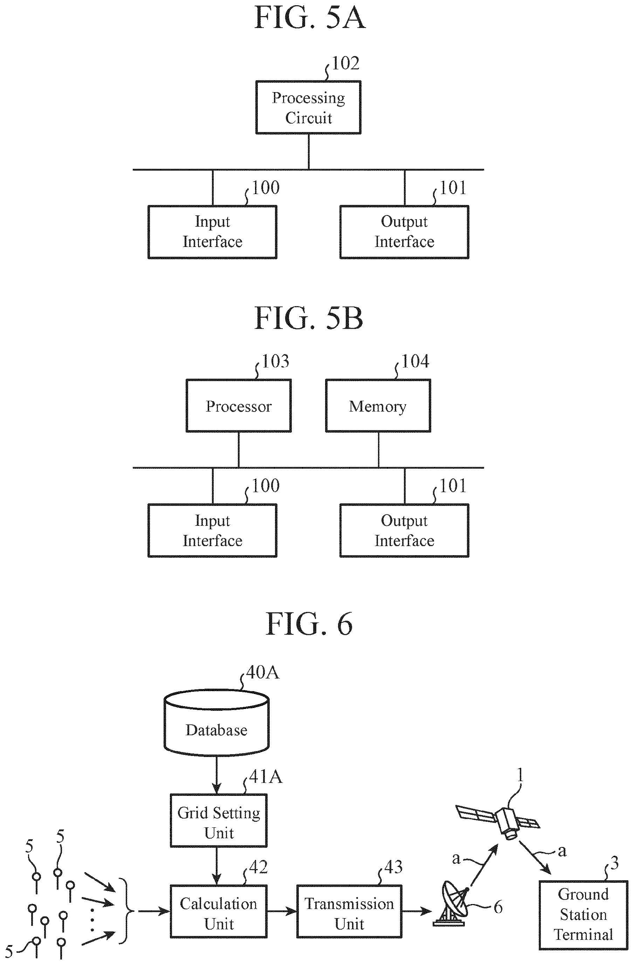

FIG. 5A is a block diagram showing a hardware configuration for implementing functions of the information processing device according to the first embodiment. FIG. 5B is a block diagram showing a hardware configuration for executing software that implements functions of the information processing device according to the first embodiment. In FIGS. 5A and 5B, an input interface 100 is an interface for relaying information input from the database 40 by the grid setting unit 41, and further relaying information input from the electronic reference point 5 by the calculation unit 42. The output interface 101 is an interface for relaying information output from the transmission unit 43 to the uplink station 6.

In a case in which the processing circuit is dedicated hardware shown in FIG. 5A, examples of a processing circuit 102 include, for example, a single circuit, a composite circuit, a programmed processor, a parallel-programmed processor, an application specific integrated circuit (ASIC), a field-programmable gate array (FPGA), or a combination thereof. Note that, the functions of the grid setting unit 41, the calculation unit 42, and the transmission unit 43 may be implemented by separate processing circuits, or these functions may be collectively implemented by one processing circuit.

In a case in which the processing circuit is a processor 103 shown in FIG. 5B, the functions of the grid setting unit 41, the calculation unit 42, and the transmission unit 43 are implemented by software, firmware, or a combination of software and firmware. Software or firmware is written as a program and stored in a memory 104. The processor 103 implements the functions of the grid setting unit 41, the calculation unit 42, and the transmission unit 43 by reading and executing the program stored in the memory 104. That is, the information processing device according to the first embodiment includes the memory 104 for storing programs by which the processing from step ST1 to step ST4 shown in FIG. 4 is executed as a result when executed by the processor 103. These programs cause a computer to execute the procedures or methods performed in the grid setting unit 41, the calculation unit 42, and the transmission unit 43. The memory 104 may be a computer-readable storage medium that stores a program for causing the computer to function as the grid setting unit 41, the calculation unit 42, and the transmission unit 43.

Examples of the memory 104 include a nonvolatile or volatile semiconductor memory, such as a random access memory (RAM), a read only memory (ROM), a flash memory, an erasable programmable read only memory (EPROM), or an electrically-EPROM (EEPROM), a magnetic disk, a flexible disk, an optical disk, a compact disk, a mini disk, and a DVD.

Note that, part of the functions of the grid setting unit 41, the calculation unit 42, and the transmission unit 43 may be implemented by dedicated hardware, and part of the functions may be implemented by software or firmware.

For example, the function of the transmission unit 43 may be implemented by a processing circuit as dedicated hardware, and the functions of the grid setting unit 41 and the calculation unit 42 may be implemented by the processor 103 reading and executing the program stored in the memory 104. Thus, the processing circuit can implement each of the above functions by hardware, software, firmware, or a combination thereof.

As described above, the information processing device according to the first embodiment sets the grid interval $D_h$ for transmitting the positioning augmentation information a from the quasi-zenith satellite 1 on the basis of statistical information of the index values of the occurrence degree of ionospheric disturbance for each area of the ground divided into a plurality of areas (the mean value of the spatial variation of the ionospheric correction value). As a result, even when ionospheric disturbance occurs, the amount of positioning augmentation information can be reduced while maintaining positioning accuracy. Furthermore, by executing the positioning augmentation information transmission method shown in FIG. 4, the same effect as described above can be obtained.

Second Embodiment.

FIG. 6 is a block diagram showing a configuration of an information processing device according to a second embodiment, the device being a device corresponding to the main control station 4 shown in FIG. 1. The information processing device shown in FIG. 6 includes a database 40A, a grid setting unit 41A, a calculation unit 42, and a transmission unit 43, and generates positioning augmentation information a for each of a plurality of grid points on the basis of correction information of positioning measured by each of a plurality of electronic reference points 5.

The database 40A stores past historical data of ionospheric correction value error σ (integrity information) for each grid point in each area. Note that, the ionospheric correction value error σ is monitored for each area for a long period of time and stored in the database 40A until the occurrence degree of ionospheric disturbance in each area can be specified.

In the area strongly affected by the ionospheric disturbance, the ionospheric correction value error σ for each grid point is large, and in the area not so affected by the ionospheric disturbance, the ionospheric correction value error σ for each grid point is small. That is, the ionospheric correction value error σ (integrity information) can be an index value of the occurrence degree of ionospheric disturbance.

Note that, the database 40A may be included in a device provided separately from the information processing device according to the second embodiment. In this case, the information processing device according to the second embodiment wirelessly or wiredly connects to the device and reads out the data stored in the database 40A. As described above, the information processing device according to the first embodiment does not have to include the database 40A.

The grid setting unit 41A sets the interval between grid points to which the positioning augmentation information a is transmitted on the basis of statistical information of the past historical data of the ionospheric correction value error σ (integrity information) for each area read from the database 40A. Similar to the first embodiment, the interval between grid points is statically set by the grid setting unit 41A. "Statically" means that the interval between grid points is set in advance on the basis of statistical information of the index values of the occurrence degree of ionospheric disturbance for each area.

Furthermore, the grid setting unit 41A sets the grid interval so that the total number of grid points related to each piece of the positioning augmentation information a delivered from the quasi-zenith satellite 1 is equal to or less than the specified value. The specified value is the total number of grid points that satisfy the limit of the transmission capacity of the positioning augmentation information a.

For example, the grid setting unit 41A reads out the ionospheric correction value error $\sigma_{Gi}$ for each grid point expressed by the following equation (8) from the database 40A for each area. In the following equation (8), $x_{Gi}$ and $y_{Gi}$ are the latitude and longitude of the i-th grid point, and $\sigma_{Gi}$ is the ionospheric correction value error (integrity information) corresponding to the i-th grid point. N is a natural number greater than or equal to 1.

$$\sigma_{Gi} = ISSR\sigma(x_{Gi}, y_{Gi}), i = 1, ..., N \qquad \cdot \cdot \cdot \quad (8)$$

Next, the grid setting unit 41A calculates the spatial average of the ionospheric correction value error $\sigma_{Gi}$ for each area on the basis of the following equation (9). In the following equation (9), $i \in h$ means the set of indexes i of the electronic reference point 5 included in the h-th area, and "mean" means to take the mean. The grid setting unit 41A reads out the error $\sigma_{Gi}$ of the ionospheric correction value measured for a long period of time from the database 40A, calculates the spatial average of the ionospheric correction value error $\sigma_{Gi}$ using the following equation (9), and calculates the mean value $\xi_h$ bar of spatial average of the ionospheric correction value error $\sigma_{Gi}$ using the following equation (10). The mean value $\xi_h$ bar can be a measure of the stability of the ionospheric layer.

$$\xi_h = mean(\sigma_{Gi}^2), i \in h \qquad \cdot \cdot \cdot \quad (9)$$

$$\overline{\xi_h} = mean(\xi_h) \qquad \cdot \cdot \cdot \quad (10)$$

The specified value TH of the total number of grid points to which the positioning augmentation information a is transmitted can be expressed by the above inequality (4) when the number of grid points in each area is $M_h$. Furthermore, the number of grid points $M_h$ can be expressed by the above equation (5), where $A_h$ is the area of the area and $D_h$ is the grid interval.

The grid setting unit 41A sets the number of grid points $M_h$ according to the following equation (11). That is, the larger ($\xi_h$ bar)$^{-1}$ is, the larger the number is, and the smaller ($\xi_h$ bar)$^{-1}$ is, the smaller the number is. The grid setting unit 41A sets the grid interval $D_h$ for each area according to the following equation (12). ($£_j$ bar)$^{-1}$ is the reciprocal of the mean value of the spatial average of the ionospheric correction value error $\sigma_{Gi}$ in the j-th area.

$$M_h = TH \frac{\overline{\xi}_h^{-1}}{\sum_{j=1}^{H} \overline{\xi}_j^{-1}} \qquad \cdot \cdot \cdot \quad (11)$$

$$D_h = \frac{A_h}{M_h} = \frac{A_h}{TH \dfrac{\overline{\xi}_h^{-1}}{\sum\limits_{j=1}^{H} \overline{\xi}_j^{-1}}} = \frac{A_h \left( \sum\limits_{j=1}^{H} \overline{\xi}_j^{-1} \right)}{TH \overline{\xi}_h^{-1}} = \frac{A_h \left( \sum\limits_{j=1}^{H} \overline{\xi}_j^{-1} \right)}{TH \overline{\xi}_h^{-1}} \qquad \cdots \ (1\,2)$$

The calculation unit 42 calculates the positioning correction information for each grid point with an interval set by the grid setting unit 41A on the basis of the positioning correction information measured by each of the plurality of electronic reference points 5. The calculation unit 42 in the second embodiment calculates the error $\sigma$ of the ionospheric correction value which is the positioning correction information.

The transmission unit 43 performs a process of transmitting the positioning augmentation information a including the ionospheric correction value error $\sigma$ calculated by the calculation unit 42 to the quasi-zenith satellite 1. For example, the transmission unit 43 transmits the positioning augmentation information a to the quasi-zenith satellite 1 via the uplink station 6. The quasi-zenith satellite 1 delivers the positioning augmentation information a received from the main control station 4 to the ground station terminal 3.

Note that, the functions of the grid setting unit 41A, the calculation unit 42, and the transmission unit 43 in the information processing device according to the second embodiment are implemented by a processing circuit. The processing circuit may be the processing circuit 102 of the dedicated hardware shown in FIG. 5A or the processor 103 that executes a program stored in the memory 104 shown in FIG. 5B.

As described above, the information processing device according to the second embodiment sets the grid interval $D_h$ for transmitting the positioning augmentation information a from the quasi-zenith satellite 1 on the basis of statistical information (the mean value of the spatial average of the ionospheric correction value error $\sigma$) of the index values of the occurrence degree of ionospheric disturbance for each area of the ground divided into a plurality of areas. As a result, even when ionospheric disturbance occurs, the amount of positioning augmentation information can be reduced while maintaining positioning accuracy. In addition, the same effect as described above can be obtained by executing the positioning augmentation information transmission method with the procedure described above.

Third Embodiment.

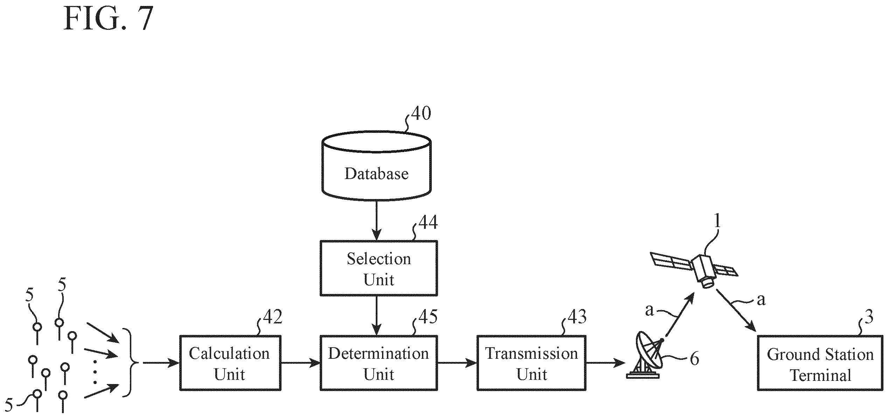

FIG. 7 is a block diagram showing a configuration of an information processing device according to the third embodiment, and the device being a device corresponding to the main control station 4 shown in FIG. 1. The information processing device shown in FIG. 7 includes a database 40, a calculation unit 42, a transmission unit 43, a selection unit 44, and a determination unit 45, and generates positioning augmentation information a for each of a plurality of grid points on the basis of correction information of positioning measured by each of a plurality of electronic reference points 5.

The database 40 is, as in the first embodiment, a database that stores an index value of occurrence degree of ionospheric disturbance for each area, and stores, for example, past history of ionospheric correction values for each grid point in each area. Note that, ionospheric correction values are monitored for each area for a long period of time and stored in the database 40 until an occurrence degree of ionospheric disturbance for each area can be specified.

Note that, the database 40 may be included in a device provided separately from the information processing device according to the third embodiment. In this case, the information processing device according to the third embodiment wirelessly or wiredly connects to the device and reads out the data stored in the database 40. As described above, the information processing device according to the third embodiment does not have to include the database 40.

The calculation unit 42 calculates the positioning correction information for each of all the grid points included in each area on the basis of correction information measured by each of the plurality of electronic reference points 5.

For example, the calculation unit 42 calculates the ionospheric correction value for each of all the grid points included in each area.

The selection unit 44 selects an order of an approximation function that approximates the ionospheric correction value calculated by the calculation unit 42 on the basis of statistical information of the index values of occurrence degree of ionospheric disturbance for each area.

For example, the selection unit 44 increases the order of the function that approximates the ionospheric correction value for lower latitude areas, and decreases the order of the function that approximates the ionospheric correction value for higher latitude areas. In Japan, the areas are the Kanto area, the Kansai area, the Kyushu area, etc., as shown in FIG. 3. It is generally said that the long-term occurrence degree of ionospheric disturbances is higher in the southern latitude areas.

For example, the selection unit 44 selects the order of the approximation function that approximates the ionospheric correction value calculated for each area by the calculation unit 42 on the basis of statistical information of the past historical data of ionospheric correction values read from the database 40. Generally, in an area strongly affected by ionospheric disturbance, the ionospheric correction value varies temporally or spatially, or becomes large. That is, the ionospheric correction value can be an index value of the occurrence degree of ionospheric disturbance.

Accordingly, the selection unit 44 selects a high order as the order of the approximation function that approximates the ionospheric correction value for each grid point calculated by the calculation unit 42 in the area where the occurrence degree of ionospheric disturbance is large, and selects a low order as the order of the approximation function that approximates the ionospheric correction value for each grid point in the area where the occurrence degree of ionospheric disturbance is small. Furthermore, the selection unit 44 selects an order of the approximation function such that the total number of grid points related to each piece of the positioning augmentation information a delivered from the quasi-zenith satellite 1 to be equal to or less than a specified value. The specified value is the total number of grid points that satisfy the limit of the transmission capacity of the positioning augmentation information a.

In the conventional CLAS, a first-order approximation function may be used as a function for approximating the ionospheric correction value, but the selection unit 44 selects a second-order approximation function expressed by the following equation (13) according to the occurrence degree of ionospheric disturbance for each area. Note that, $p_{00}$, $p_{10}$, $p_{20}$, $p_{01}$, $p_{02}$, $p_{11}$, $p_{21}$ and $p_{12}$ are coefficients of the approximation function shown in the following equation (13). Furthermore, the following equation (13) can be generalized as the following equation (14), where M is the order.

$$f(x,y) = p_{00} + p_{10}x + p_{20}x^2 + p_{01}y + p_{02}y^2 + p_{11}xy + p_{21}x^2y + p_{12}xy^2$$

$$= \sum_{\substack{i=0,..,2 \\ j=0,..,2}} p_{ij}x^i y^j \qquad \cdots \ (1 3)$$

$$f(x,y) = \sum_{\substack{i=0,..,M \\ j=0,..,M}} p_{ij}x^i y^j \qquad \cdots \ (1 4)$$

When the total number of coefficients of the approximation function of order M is $C_M$, the order corresponding to the h-th area is M(h), and the total number of coefficients of the approximation function of order M(h) is $C_{M(h)}$, the total number of coefficients of the approximation function the total number of grid points that is less than a specified value can be expressed by the following inequality (15).

$$\sum_{h=1}^{H} C_{M(h)} < TH \qquad \cdots \ (1 5)$$

The selection unit 44 calculates the order M(h) for each area according to the following equation (16) using the mean value $\overline{\Omega}_h$ bar of the spatial variation of the ionospheric correction value $I_{Gi}$. As the order M(h), the larger the $\overline{\Omega}_h$ bar is, the higher an order is selected, and the smaller the $\overline{\Omega}_h$ bar is, the lower an order is selected. Note that, in the following equation (16), K is a parameter set by the user.

$$M(h) = K \frac{\overline{\Omega}_h}{\sum_{j=1}^{H} \overline{\Omega}_j} \qquad \cdots \ (1 6)$$

The determination unit 45 determines values of coefficients of an approximation function when an ionospheric correction value is approximated using the approximation function of the order selected by the selection unit 44. For example, the determination unit 45 calculates the coefficients $p_{00}$, $p_{10}$, $p_{20}$, $p_{01}$, $p_{02}$, $p_{11}$, $p_{21}$ and $p_{12}$ by using the least-square method for the approximation function of the above equation (13).

The transmission unit 43 includes the values of the coefficients determined by the determination unit 45 in the positioning augmentation information a and performs a process of transmitting it to the quasi-zenith satellite 1. For example, the transmission unit 43 transmits the positioning augmentation information a to the quasi-zenith satellite 1 via the uplink station 6. The quasi-zenith satellite 1 delivers the positioning augmentation information a received from the main control station 4 to the ground station terminal 3. Because only the coefficients when the ionospheric correction value is approximated with the approximation function are transmitted as the positioning augmentation information a, the amount of information to be transmitted is reduced. Furthermore, because the order of the approximation function is selected according to the occurrence degree of ionospheric disturbance, the approximation error can be reduced.

Note that, the functions of the calculation unit 42, the transmission unit 43, the selection unit 44, and the determination unit 45 in the information processing device according to the third embodiment are implemented by a processing circuit. The processing circuit may be the processing circuit 102 of the dedicated hardware shown in FIG. 5A or the processor 103 that executes a program stored in the memory 104 shown in FIG. 5B.

As described above, the information processing device according to the third embodiment selects the order of the approximation function that approximates the ionospheric correction value on the basis of statistical information of the index values (the mean value of the spatial variation of the ionospheric correction value) of the occurrence degree of ionospheric disturbance for each area of the ground divided into a plurality of areas, determines the value of coefficient when the ionospheric correction value is approximated using the approximation function of the selected order, includes the determined coefficient value in the positioning augmentation information a, and transmits it. As a result, even when ionospheric disturbance occurs, it is possible to reduce the amount of positioning augmentation information while maintaining positioning accuracy. In addition, the same effect as described above can be obtained by executing the positioning augmentation information transmission method with the procedure described above.

Fourth Embodiment.

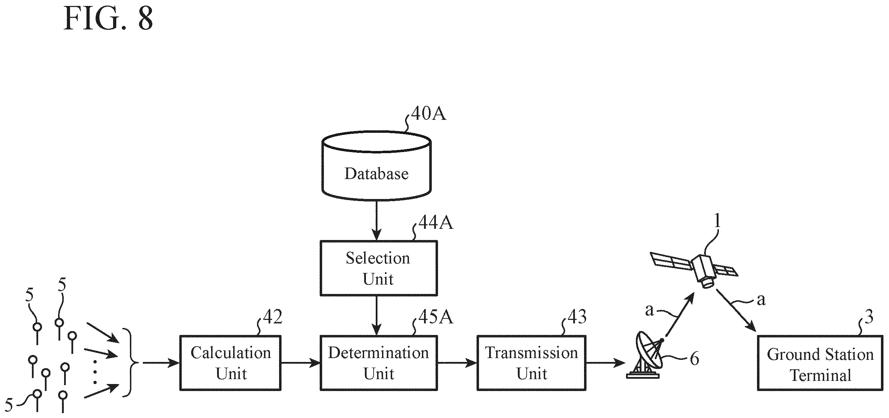

FIG. 8 is a block diagram showing a configuration of an information processing device according to a fourth embodiment, the device being a device corresponding to the main control station 4 shown in FIG. 1. The information processing device shown in FIG. 8 includes a database 40A, a calculation unit 42, a transmission unit 43, a selection unit 44A, and a determination unit 45A, and generates positioning augmentation information a for each of a plurality of grid points on the basis of positioning correction information measured by each of a plurality of electronic reference points 5.

The database 40A stores past historical data of ionospheric correction value error $\sigma$ (integrity information) for each grid point for each area. Note that, the ionospheric correction value error $\sigma$ is monitored for each area for a long period of time and stored in the database 40A until the occurrence degree of ionospheric disturbance in each area can be specified.

In the area strongly affected by the ionospheric disturbance, the ionospheric correction value error $\sigma$ for each grid point is large, and in the area not so affected by the ionospheric disturbance, the ionospheric correction value error $\sigma$ for each grid point is small. That is, the ionospheric correction value error $\sigma$ (integrity information) can be an index value of the occurrence degree of ionospheric disturbance.

Note that, the database 40A may be included in a device provided separately from the information processing device according to the second embodiment. In this case, the information processing device according to the second embodiment wirelessly or wiredly connects to the device and reads out the data stored in the database 40A. As described above, the information processing device according to the first embodiment does not have to include the database 40A.

The calculation unit 42 calculates the ionospheric correction value error $\sigma$ (integrity information) for each of all the grid points included in each area.

The selection unit 44A selects the order of the approximation function that approximates the ionospheric correction value error $\sigma$ calculated for each grid point by the calculation unit 42 on the basis of statistical information of the past historical data of the ionospheric correction value error $\sigma$ (integration information). For example, the selection unit 44A selects the order M(h) for each area according to the following equation (17). As the order M(h), the larger the $(\bar{\xi}_h)^{-1}$, which is the reciprocal of the mean value of the spatial average of the ionospheric correction value error $\sigma_{Gi}$ in the h-th area, is, the higher order is selected, and the smaller the $(\bar{\xi}_h)^{-1}$ is, the lower order is selected. In the following equation (17), K is a parameter set by the user.

$$M(h) = K \frac{\overline{\xi}_h^{-1}}{\sum\limits_{j=1}^{H} \overline{\xi}_j^{-1}} \qquad \cdot \cdot \cdot (17)$$

The determination unit 45A determines the values of coefficients of the approximation function when the ionospheric correction value error $\sigma$ is approximated using the approximation function of the order selected by the selection unit 44A. For example, the determination unit 45A calculates the coefficients $p_{00}$, $p_{10}$, $p_{20}$, $p_{01}$, $p_{02}$, $p_{11}$, $p_{21}$ and $p_{12}$ by using the least-square method for the approximation function of the above equation (13).

The transmission unit 43 includes the values of the coefficients determined by the determination unit 45A in the positioning augmentation information a and performs a process of transmitting it to the quasi-zenith satellite 1. For example, the transmission unit 43 transmits the positioning augmentation information a to the quasi-zenith satellite 1 via the uplink station 6. The quasi-zenith satellite 1 delivers the positioning augmentation information a received from the main control station 4 to the ground station terminal 3. Because only the coefficients when the ionospheric correction value error $\sigma$ is approximated by the approximation function are included in the positioning augmentation information a and transmitted, the amount of information to be transmitted is reduced. Furthermore, since the order of the approximation function is selected according to the occurrence degree of ionospheric disturbance, the approximation error can be reduced.

Note that, the functions of the calculation unit 42, the transmission unit 43, the selection unit 44A, and the determination unit 45A in the information processing device according to the fourth embodiment are implemented by a processing circuit. The processing circuit may be the processing circuit 102 of the dedicated hardware shown in FIG. 5A or the processor 103 that executes a program stored in the memory 104 shown in FIG. 5B.

As described above, the information processing device according to the fourth embodiment selects the order of the approximation function that approximates the ionospheric correction value error $\sigma$ on the basis of statistical information (the mean value of the spatial average of the ionospheric correction value error $\sigma$) of index values of the occurrence degree of ionospheric disturbance for each area of the ground divided into a plurality of areas, determines the value of the coefficient when the ionospheric correction value error $\sigma$ is approximated using the approximation function of the selected order, includes the determined value of coefficient in the positioning augmentation information a, and transmits it. As a result, even when ionospheric disturbance occurs, it is possible to reduce the amount of positioning augmentation information while maintaining positioning accuracy. In addition, the same effect as described above can be obtained by executing the positioning augmentation information transmission method with the procedure described above.

Note that, in the description of the first to fourth embodiments, the case where the index value of the occurrence degree of ionospheric disturbance is the ionospheric correction value or the ionospheric correction value error $\sigma$ (integrity information) is shown. However, in each of the information processing devices shown in the first to fourth embodiments, the index value is not limited to the ionospheric correction value or the ionospheric correction value error $\sigma$, and may be any information that can be an index value of the occurrence degree of ionospheric disturbance.

Fifth Embodiment.

Generally, the occurrence degree of ionospheric disturbance increases as a location gets closer to the equator. Accordingly, in an information processing device according to the fifth embodiment, the grid interval is set narrow when the latitude is close to the equator, and the grid interval is set wide when the latitude is far from the equator. Latitude is based on magnetic latitude or geographic latitude. For example, the grid setting unit shown in the first embodiment or the second embodiment sets the interval between the grid points to which the positioning augmentation information a is transmitted from the quasi-zenith satellite 1 depending on the latitude of the area. Alternatively, the selection unit shown in the third embodiment or the fourth embodiment selects the order of the approximation function and may set the interval between the grid points to which the positioning augmentation information a is transmitted depending on the latitude of the area.

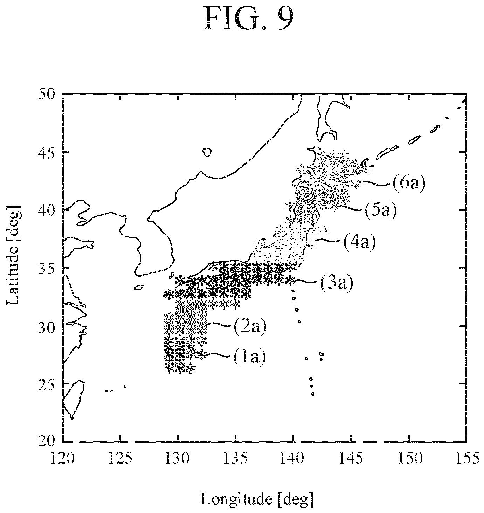

FIG. 9 is a diagram in which areas susceptible to ionospheric disturbance are divided for each latitude, and shows a case in which the ground is divided into six areas (1a) to (6a) depending on the latitude. In addition to two areas of an area near the equator and an area far from the equator, in the information processing device according to the fifth embodiment, the grid interval may be gradually changed in the area divided into two or more stages regarding the proximity to the equator. Note that, in the information processing device according to the fifth embodiment, the grid interval is set so that the total number of grid points related to the positioning augmentation information a to be delivered from the quasi-zenith satellite 1 is equal to or less than a specified value. The specified value is the total number of grid points that satisfy the limit of the transmission capacity of the positioning augmentation information a.

As described above, the information processing device according to the fifth embodiment sets the interval between the grid points to which the positioning augmentation information a is transmitted from the quasi-zenith satellite 1 depending on the latitude on the ground. As a result, even if ionospheric disturbance occurs, the amount of positioning augmentation information can be reduced while maintaining positioning accuracy.

Note that, the present invention is not limited to the above-described embodiments, and within the scope of the present invention, it is possible to modify any component of the embodiments or omit any component of the embodiments.

INDUSTRIAL APPLICABILITY

The information processing device according to the present invention can be used in a positioning system represented by CLAS, for example, because it can reduce the amount of positioning augmentation information while maintaining positioning accuracy even if ionospheric disturbance occurs.

REFERENCE SIGNS LIST

1: quasi-zenith satellite, 2: GNSS satellite, 3: ground station terminal, 4: main control station, 5: electronic reference point, 6: uplink station, 40, 40A: database, 41, 41A: grid setting unit, 42: calculation unit, 43: transmission unit, 44, 44A: selection unit, 45, 45A: determination unit, 100: input interface, 101: output interface, 102: processing circuit, 103: processor, 104: memory

**Claims**

1. An information processing device used in a positioning system that includes a first satellite for transmitting positioning augmentation information, a second satellite for transmitting positioning information, and a terminal that performs positioning using the positioning information, the first satellite transmitting the positioning augmentation information for a grid point set on the ground, and the terminal correcting the positioning information using the positioning augmentation information to perform positioning, the information processing device comprising:

   a setting unit for setting an interval between grid points to which the positioning augmentation information from the first satellite is transmitted, on a basis of statistical information on index values of occurrence degree of ionospheric disturbance for each area of the ground divided into a plurality of areas;
   a calculation unit for calculating positioning correction information for each grid point with the interval set by the setting unit; and
   a transmission unit for performing a process of transmitting the positioning augmentation information including the positioning correction information calculated by the calculation unit to the first satellite.

2. The information processing device according to claim 1, wherein the setting unit sets an interval between grid points to which the positioning augmentation information from the first satellite is transmitted on a basis of statistical information on an ionospheric correction value to be used for correcting a transmission delay of the positioning information in an ionospheric layer.

3. The information processing device according to claim 1, wherein the setting unit sets an interval between grid points to which the positioning augmentation information from the first satellite is transmitted on a basis of statistical information on an error of an ionospheric correction value to be used for correcting a transmission delay of the positioning information in an ionospheric layer.

4. The information processing device according to any one of claims 1 to 3, wherein the setting unit sets the interval between grid points to which the positioning augmentation information from the first satellite is transmitted depending on latitude on the ground.

5. An information processing device used in a positioning system that includes a first satellite for transmitting positioning augmentation information, a second satellite for transmitting positioning information, and a terminal that performs positioning using the positioning information, the first satellite transmitting the positioning augmentation information for a grid point set on the ground, and the terminal correcting the positioning information using the positioning augmentation information to perform positioning, the information processing device comprising:

   a calculation unit for calculating positioning correction information for grid points set for each area of the ground divided into a plurality of areas;
   a selection unit for selecting an order of an approximation function that approximates the positioning correction information calculated by the calculation unit, on a basis of statistical information on index values of occurrence degree of ionospheric disturbance for each area;
   a determination unit for determining a value of a coefficient of the approximation function in a case in which the positioning correction information is approximated using the approximation function of the order selected by the selection unit; and

a transmission unit for performing a process of transmitting the value of the coefficient determined by the determination unit as part of the positioning augmentation information to the first satellite.

6. The information processing device according to claim 5, wherein the selection unit selects, on a basis of statistical information of ionospheric correction values used for correcting a transmission delay of the positioning information in an ionospheric layer, an order of an approximation function that approximates the ionospheric correction value calculated for each area by the calculation unit.

7. The information processing device according to claim 5, wherein the selection unit selects, on a basis of statistical information of errors of the ionospheric correction values used for correcting a transmission delay of the positioning information in an ionospheric layer, an order of an approximation function that approximates an error of the ionospheric correction value for each area calculated for each area by the calculation unit.

8. The information processing device according to any one of claims 5 to 7, wherein the selection unit sets an interval between grid points to which the positioning augmentation information from the first satellite is transmitted depending on latitude on the ground.

9. A positioning augmentation information transmission method of a positioning system that includes a first satellite for transmitting positioning augmentation information, a second satellite for transmitting positioning information, and a terminal that performs positioning using the positioning information, the first satellite transmitting the positioning augmentation information for a grid point set on the ground, and the terminal correcting the positioning information using the positioning augmentation information to perform positioning, the positioning augmentation information transmission method comprising:

setting, by a setting unit, an interval between grid points to which the positioning augmentation information from the first satellite is transmitted, on a basis of statistical information on index values of occurrence degree of ionospheric disturbance for each area of the ground divided into a plurality of areas;
calculating, by a calculation unit, positioning correction information for each grid point with the interval set by the setting unit; and
performing, by a transmission unit, a process of transmitting the positioning augmentation information including the positioning correction information calculated by the calculation unit to the first satellite.

# FIG. 1

# FIG. 2

# FIG. 3

# FIG. 4

```
        ┌─────────┐
        │  Start  │
        └─────────┘
             │
             ▼◄──────────────────────────┐
┌──────────────────────────────────────┐ │
│   Set Grid Interval on the Basis of   │ │
│  Statistical Information of Index     │ │
│  Values of Occurrence Degree          ├─┤ ST1
│  of Ionospheric Disturbance for Each  │ │
│  Area                                 │ │
└──────────────────────────────────────┘ │
             │                            │
             ▼                       ST2  │
      ◄─────────────────────────►         │
      │ Grid Interval Is Set for │────────┘
      │       All Areas?         │  NO
      ◄─────────────────────────►
             │ YES
             ▼
┌──────────────────────────────────────┐
│   Calculate Ionospheric Correction    │ ST3
│   Value for Each Grid with Set Interval│
└──────────────────────────────────────┘
             │
             ▼
┌──────────────────────────────────────┐
│  Transmit Positioning Augmentation    │
│  Information Including Ionospheric     │ ST4
│  Correction Value at Set Grid Interval │
└──────────────────────────────────────┘
             │
             ▼
        ┌─────────┐
        │   End   │
        └─────────┘
```

# FIG. 5A

Processing Circuit — 102

Input Interface — 100

Output Interface — 101

# FIG. 5B

Processor — 103

Memory — 104

Input Interface — 100

Output Interface — 101

# FIG. 6

Database — 40A

Grid Setting Unit — 41A

Calculation Unit — 42

Transmission Unit — 43

Ground Station Terminal — 3

5

6

1

a

17

# FIG. 7

FIG. 8

Ground Station Terminal 3

Transmission Unit 43

Database 40A

Selection Unit 44A

Determination Unit 45A

Calculation Unit 42

# FIG. 9

## INTERNATIONAL SEARCH REPORT

| International application No. |
| --- |
| PCT/JP2019/008652 |

### A. CLASSIFICATION OF SUBJECT MATTER
Int. Cl. G01S19/07(2010.01)i

According to International Patent Classification (IPC) or to both national classification and IPC

### B. FIELDS SEARCHED

Minimum documentation searched (classification system followed by classification symbols)
Int. Cl. G01S19/00-G01S19/55

Documentation searched other than minimum documentation to the extent that such documents are included in the fields searched
Published examined utility model applications of Japan    1922-1996
Published unexamined utility model applications of Japan  1971-2019
Registered utility model specifications of Japan          1996-2019
Published registered utility model applications of Japan  1994-2019

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2018-112555 A (MITSUBISHI ELECTRIC CORP.) 19 July 2018, paragraphs [0012]-[0041], fig. 1-8 & US 2017/0363744 A1, paragraphs [0042]-[0159], fig. 1-8 & WO 2016/088654 A1 | 1-4, 9 |
| Y | JP 2013-186127 A (THALES SA) 19 September 2013, paragraphs [0001]-[0047], fig. 1-6 & US 2013/0234886 A1, paragraphs [0001]-[0069], fig. 1-6 & EP 2637040 A1 & FR 2987899 A1 & CA 2808155 A1 | 1-4, 9 |
| Y | WO 2015/145719 A1 (MITSUBISHI ELECTRIC CORP.) 01 October 2015, paragraphs [0013], [0047], fig. 2, 18 & US 2017/0090038 A1, paragraphs [0062]-[0064], [0205]-[0210], fig. 2, 18 & EP 3124997 A1 | 3 |

☒  Further documents are listed in the continuation of Box C.          ☐  See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 27.05.2019 | 11.06.2019 |

| Name and mailing address of the ISA/ | Authorized officer |
| --- | --- |
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.

PCT/JP2019/008652

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2002-318271 A (JAPAN RADIO CO., LTD.) 31 October 2002, paragraphs [0012], [0021], [0022], table 1 (Family: none) | 1-9 |
| A | JP 2010-112842 A (NATIONAL INSTITUTE OF INFORMATION AND COMMUNICATIONS TECHNOLOGY) 20 May 2010, entire text, all drawings (Family: none) | 1-9 |
| A | JP 2014-109578 A (THALES SA) 12 June 2014, entire text, all drawings & US 2014/0152497 A1 & EP 2738573 A1 & FR 2998976 A1 & CA 2835420 A1 | 1-9 |
| A | US 2014/0292573 A1 (TRIMBLE NAVIGATION LIMITED) 02 October 2014, entire text, all drawings & EP 2746811 A2 | 1-9 |
| A | US 2006/0017610 A1 (CALIFORNIA INSTITUTE OF TECHNOLOGY) 26 January 2006, entire text, all drawings (Family: none) | 1-9 |
| A | SAKAI, Takeyasu et al., Improving Availability of Ionospheric Corrections in the Low Magnetic Latitude Region, Proceedings of the Institute of Navigation 2005 National Technical Meeting, The Institute of Navigation, 26 January 2005, pages. 569-579 | 1-9 |

Form PCT/ISA/210 (continuation of second sheet) (January 2015)

22

**EP 3 923 029 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016088654 A